**Europäisches Patentamt**

**European Patent Office**

**Office européen des brevets**

(11) Veröffentlichungsnummer: **0 271 696**
**A2**

(12) # EUROPÄISCHE PATENTANMELDUNG

(21) Anmeldenummer: 87116305.1

(22) Anmeldetag: 05.11.87

(51) Int. Cl.⁴: **B23K 9/04**

(30) Priorität: 16.12.86 DE 3642886
08.01.87 DE 3700377

(43) Veröffentlichungstag der Anmeldung:
22.06.88 Patentblatt 88/25

(84) Benannte Vertragsstaaten:
BE CH DE ES FR GB IT LI NL SE

(71) Anmelder: **MAN GUTEHOFFNUNGSHÜTTE GMBH**
**Bahnhofstrasse, 66 Postfach 11 02 40**
**D-4200 Oberhausen 11(DE)**

(72) Erfinder: **Million, Karl, Dr.-Ing.**
**Am Grafenbusch 46**
**D-4200 Oberhausen 11(DE)**

(54) **Verfahren und Vorrrichtung zur Herstellung von dünnwandigen Hohlkörpern aus konzentrischen metallischen Schichten.**

(57) Für dünnwandige, bei hoher Temperatur beanspruchte Bauteile von Chemieanlagen werden in erster Linie Rohre aus unbeschichteten Einzelwerkstoffen verwendet. Aufgrund der Herstellungsverfahren weisen die Bauteile aus diesen Werkstoffen Nachteile auf, weil die Einzelwerkstoffe, aus denen sie gestaltet sind, nicht gleichzeitig den Anforderungen auf Korrosionsbeständigkeit, Hochwarmfestigkeit und Zunderbeständigkeit genügen können. Nach dem neuen Verfahren sollen z.B. dünnwandige Rohre aus konzentrischen, korrosionsbeständigen, hochwarmfesten und zunderbeständigen Werkstoffschichten hergestellt werden.

Für die korrosionsbeständige Innenschicht wird beispielhaft ein konventionelles dünnwandiges Rohr verwendet. Auf dieses Rohr werden hochwarmfeste sowie zunderbeständige Schichten durch Auftragschweißen mit einem oder mehreren Schweißköpfen in der Weise hergestellt, daß während des Auftragschweißens das dünnwandige Innenrohr (1) mit einem druckbeaufschlagten Kühlmedium gefüllt ist. Beim Auftragschweißen wird das Innenrohr (1) durch Trennwände (2, 3, 4) in einen oder mehrere Kühlabschnitte (5) unterteilt und mit abschnittsweise funktionierenden und der Anzahl der Schweißköpfe (6) bzw. Schweißbereiche (7) angepaßten Kühlkreisläufen (8, 9, 10) versehen.

Die nach dem Verfahren hergestellten Hohlkörper finden vorwiegend in Hochtemperaturanlagen der chemischen Industrie Verwendung.

Fig. 1

"Verfahren und Vorrichtung zur Herstellung von dünnwandigen Hohlkörpen aus konzentrischen metallischen Schicten"

Die Erfindung betrifft ein Verfahren zur Herstellung von dünnwandigen Hohlkörpern aus konzentrischen, vorwiegend korrosionsbeständigen, hochwarmfesten und zunderbeständigen metallischen Schichten und eine Vorrichtung zur Durchführung des Verfahrens.

Dünnwandige Hohlkörper, wie z.B. Rohre und Rohrkrümmer, aus konzentrischen metallischen Schichten können in der chemischen Industrie, vor allem in Hochtemperaturanlagen, von großer Bedeutung sein, weil Werkstoffe für Teile derartiger Anlagen, bei denen mit Temperaturen bis 1200° C gearbeitet wird, gleichzeitig mehrere Eigenschaften aufweisen müssen, wie Korrosionsbeständigkeit, Hochwarmfestigkeit und Zunderbeständigkeit.

Für die betreffenden dünnwandigen Bauteile zuvor genannter Anlagen werden unbeschichtete Einzelwerkstoffe verwendet. Aufgrund der Herstellungsverfahren weisen die Bauteile aus diesen Werkstoffen Nachteile auf, weil die Einzelwerkstoffe, aus denen sie gestaltet sind, nur in eingeschränktem Maße mehrere Werkstoffeigenschaften, wie Korrosionsbeständigkeit, Hochwarmfestigkeit und Zunderbeständigkeit, gleichzeitig erfüllen können.

Aus diesen Gründen wird angestrebt, Herstellungsverfahren zu finden, die es ermöglichen, z.B. Rohre und Rohrkrümmer aus schichtweise aufgebauten unterschiedlichen Werkstoffarten zu schaffen, von denen jede Werkstoffart hauptsächlich nur eine der genannten Werkstoffeigenschaften übernehmen soll.

Aufgabe der Erfindung ist es daher, ein Verfahren und eine Vorrichtung zur Herstellung dünnwandiger Hohlkörper aus konzentrischen, vorwiegend korrosionsbeständigen, hochwarmfesten und zunderbeständigen metallischen Schichten zu schaffen.

Diese Aufgabe wird erfindungsgemäß in der Weise gelöst, wie es in den Patentansprüchen angegeben ist.

Das Schweißplattieren und Formschweißen von dickwandigen Hohlkörpern aus ferritischen und austenitischen Werkstoffen ist bekannt.

Verfahren zur Herstellung von dünnwandigen Hohlkörpern, bei denen die Wandungen der Bauteile in Schichten mit getrennten Funktionen aufgebaut werden, sind bisher nicht bekannt geworden. Das erfindungsgemäße Verfahren eröffnet daher die Möglichkeit, dünnwandige Bauteile aus einem Werkstoffverbund herzustellen, der Beanspruchungen bei der Verwendung im Hochtemperaturanlagenbau gerecht wird.

Nach dem erfindungsgemäßen Verfahren und dem Hauptanspruch wird demnach z.B. ein dünnwandiges Rohr aus korrosionsbeständigen, hochwarmfesten und zunderbeständigen konzentrischen Schichten in der Weise hergestellt, daß auf ein konventionelles Rohr aus korrosionsbeständigem Werkstoff zunächst durch Auftragschweißen Schichten aus hochwarmfestem Werkstoff und anschließend auf diese Schichten weitere Schichten aus zunderbeständigem Werkstoff aufgetragen werden, wobei zur Erhaltung eines kreisrunden Rohres und zur raschen Abkühlung der Schweißraupe beim Auftragschweißen eine druckbeaufschlagte Innenkühlung stattfindet.

Vorbeschriebene Rohre können z.B. in Anlagen Verwendung finden, bei denen durch die Rohre ein chemisch aggressives Medium fließt und bei denen die Rohre von außen dem Angriff hoher Temperaturen ausgesetzt sind, d.h. diese Rohre sind innen korrosionsbeständig und außen zunderbeständig. Werden Rohre benötigt, die in Umkehrung innen zunderbeständig und außen korrosionsbeständig sein müssen, so können derartige Rohre in der Weise hergestellt werden, daß auf ein konventionelles Innenrohr mittels Auftragschweißen eine hochwarmfeste und danach eine korrosionsbeständige Schicht aufgetragen wird und das Rohr anschließend innenseitig eine zunderbeständige Schweißplattierung erhält, wobei während des Auftragschweißens auf das Innenrohr das Rohr erfindungsgemäß miteinem druckbeaufschlagten Kühlmedium gekühlt wird. Während des Schweißplattierens des Rohres von innen kann von der Außenseite nach Bedarf ebenfalls eine Kühlung erfolgen.

Anhand der Schemazeichnungen werden das erfindungsgemäße Verfahren und die Kühlvorrichtung näher erläutert.

Es zeigen

Fig. 1 einen Längsschnitt durch einen Rohrschuß mit Innenkühlvorrichtung und

Fig. 2 den Aufbau der Schichten der Rohrwandung.

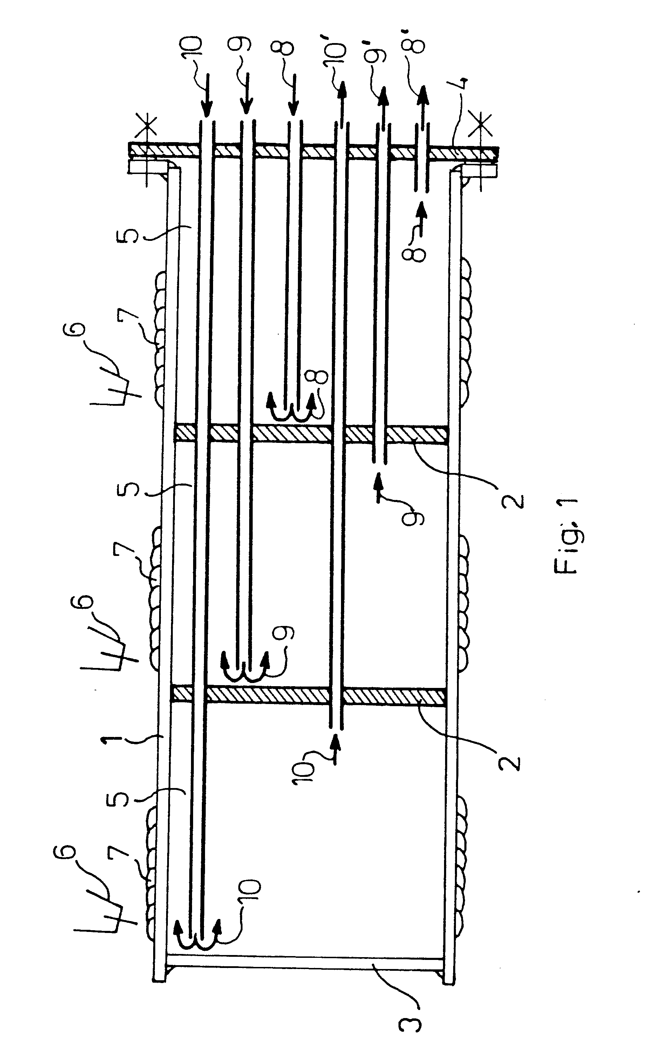

Nach Fig. 1 ist der Rohrschuß (1) eines dünnwandigen konventionellen Rohres aus korrosionsbeständigem Werkstoff in liegender Position dargestellt. Auf den Rohrschuß (1) wird von den Schweißköpfen (6) kontinuierlich die Auftragschweißung der hochwarmfesten Lagen durchgeführt.

Damit während des Auftragschweißens die Formstabilität des Rohres gegenüber Schrumpfkräften der Schweißraupen gewahrt bleibt und andererseits die erforderliche Wärmeabfuhr der durch den Schweißprozeß eingebrachten thermischen Energie gewährleistet wird, ist in den Rohrschuß (1) eine Kühlvorrichtung eingebracht worden. Diese Kühlvorrichtung besteht aus den Trennwänden (2), die Kreisquerschnitt besitzen und dem Innendurchmesser des Rohrschusses (1) angepaßt sind. Durch die Trennwände (2) sind die Rohre (9, 10) für das flüssige Kühlmedium hindurchgeführt. Die Kühlvorrichtung weist ferner eine Abschlußplatte (4) auf, durch die sowohl die bereits erwähnten Rohre (9, 10) und die weiteren Rohre (8) hindurchgeführt sind.

Vor dem Einbringen der Kühlvorrichtung in den Rohrschuß (1) wird an einem Ende des Rohrschusses (1) eine Trennwand (3) eingeschweißt. Die in das Rohr (1) eingesetzte Kühlvorrichtung teilt das Rohr mit Hilfe der Trennwände (2) in drei Abschnitte (5) auf. Die Abschlußplatte (4) wird mit dem anderen Ende des Rohres (1) lösbar verbunden.

Die Anzahl der Abschnitte (5) der Kühlvorrichtung entspricht der Anzahl der Schweißköpfe (6).

Über die Rohre (8, 9, 10) wird von außen in Pfeilrichtung flüssiges Kühlmedium, z.B. Wasser, im Kreislauf in die einzelnen Abschnitte (5) des Rohrschusses (1) eingeleitet. Durch die Rohre (8', 9', 10') wird das aufgewärmte Kühlmedium wieder aus den einzelnen Abschnitten (5) der Kühlvorrichtung nach außen abgeführt.

Sobald der Schweißprozeß, d.h. das Auftragschweißen der einzelnen Schichten auf das konventionelle Innenrohr, beendet ist, wird die Kühlvorrichtung nach Lösen der Abschlußplatte (4) vom Rohrschuß (1) entfernt und kann bei der Herstellung weiterer Rohrschüsse verwendet werden.

Von dem fertiggestellten Rohrschuß (1) wird die Trennwand (3) abgeschnitten und ebenfalls der auf das andere Ende des Rohrschusses aufgeschweißte Flansch für die Abschlußplatte (4). Sodann kann in gleicher Weise Rohrschuß für Rohrschuß hergestellt werden und die fertigen Rohrschüsse können dann in bekannter Weise durch Schweißung miteinander zu einer Rohrleitung verbunden werden.

Anstelle der beschriebenen Kühlvorrichtung mit Flüssigkeitskühlung kann auch ein in den Patentfiguren nicht dargestellter expandierender metallischer Dorn, vorzugsweise aus Kupfer bestehend, verwendet werden, der in den Rohrschuß eingeführt und an die Innenwand des Rohres gedrückt wird. Hier wird zur Schweißwärmeabfuhr die gute Wärmeleitfähigkeit des Kupfers ausgenutzt. Dabei kann der beispielsweise aus zwei oder drei Hohlteilen zu einem Dorn mit Kreisquerschnitt zusammengesetzte Kühlkörper mit einem Wasser-oder Luftkühlkreislauf versehen werden. Die hohlen Dornteile können ebenfalls, ähnlich wie im Beispiel gem. Fig. 1, in mehrere Abschnitte unterteilt sein.

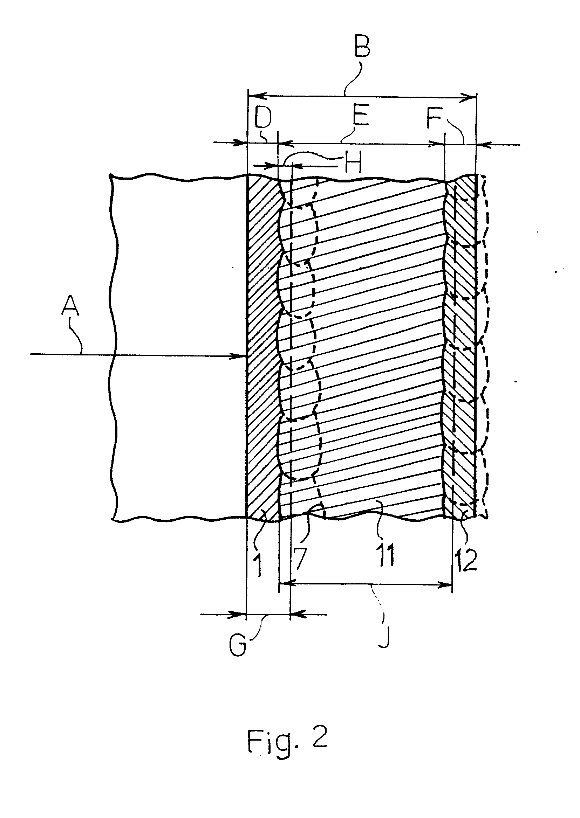

Nachstehend wird anhand der Fig. 1 und 2 beispielhaft die Herstellung von dreischichtigen Rohren beschrieben, wobei die Aufgabe gestellt sein soll, derartige Rohre mit 100 mm Innendurchmesser (A gem. Fig. 2), einer Gesamtdicke (B) von 8 mm und einer Länge pro Rohrschuß von 2000 mm herzustellen, wobei die korrosionsbeständige Innenschicht (D) des Rohres 1,5 mm, die hochwarmfeste, drucktragende Mittelschicht (F) 5 mm und die zunderbeständige Außenschicht (F) 1,5 mm betragen sollen.

Diese Aufgabe wird gemäß Patentanspruch 2 so gelöst, daß für die korrosionsbeständige Innenschicht (D) ein konventionelles Rohr mit 104 mm Innendurchmesser, 2 mm Wanddicke (G) und 2100 mm Länge gewählt wird. Die über die Länge 2000 mm hinausgehenden 100 mm sind Zugabe zum Einbau der Trennwand (3) und der Abschlußplatte (4) gem. Fig. 1.

Ebenfalls gemäß dem Hauptanspruch wird als Kühlmedium beispielsweise Wasser genommen und mit Druck in der Weise beaufschlagt, daß nach dem Auftragschweißen das Innenrohr kreisrund bleibt und unter der Einwirkung der Schweißschrumpfkräfte auf ein Endmaß (A) des Innendurchmessers von 100 mm gelangt.

Nach den Patentansprüchen wird für den 2000 mm langen Rohrschuß das Auftragschweißen mit mehreren Schweißköpfen durchgeführt, wobei im Falle dieses Anwendungsbeispiels vier Schweißköpfe mit je einem Schweißbereich von 500 mm Länge eingesetzt werden.

Um beim Auftragschweißen der ersten hochwarmfesten Lage (7) auf das Innenrohr (1) die geringe Einbrandtiefe (H) von 0,5 mm und entsprechend niedrige Aufmischung zu gewährleisten, wird nach Patentanspruch 2 für dieses Anwendungsbeispiel das Schweißen in senkrechter Rohrposition vorgenommen.

Gemäß Patentanspruch 3 werden die vier Schweißköpfe stationär zum Innenrohr in der Weise angebracht, daß bei jeder Umdrehung des Rohres alle vier Schweißköpfe gleichzeitig um etwa 1/2 Schweißraupenbreite axial und nach Abschluß eines Schweißabschnittes (7) von 500 mm Länge um eine Lagendicke radial verstellt bzw. nach Herstellung einer Schweißlage in die Ausgangsposition zurückgeführt werden.

Nach Patentanspruch 4 wird eine Kühlvorrichtung mit beispielsweise vier Kühlabschnitten (5) verwendet, wobei im Falle dieses verhältnismäßig kurzen Rohrschusses von 2000 mm entsprechend Anspruch 5 die Alternative mit kommunizierenden Kühlkreisläufen zur Anwendung kommt und am senkrecht gestellten Rohrschuß in allen Kühlabschnitten ein annähernd gleichbleibender Druck eingestellt wird. Die pro Zeiteinheit durchfließende Menge an Kühlmedium richtet sich nach der erforderlichen Kühlwirkung.

Anschließend an die erste Lage (7) der hochwarmfesten Werkstoffschicht wird in gleicher Weise eine Gesamtdicke von mindestens 5,5 mm in mehreren Lagen (11) auftraggeschweißt und gegebenenfalls auf ein Endmaß (J) von 5,5 mm mechanisch nachgearbeitet.

Schließlich wird beispielsweise mit gleicher Vorgehensweise, jedoch mit dem für die zunderbeständige Werkstoffeigenschaft entsprechenden Werkstoff, eine mindestens 1,5 mm dicke Außenschicht (12) auftraggeschweißt bzw. auf das Endmaß (F) mechanisch nachgearbeitet. Anschließend werden die jeweils 50 mm Zugaben an den beiden Rohrenden abgetrennt.

### Ansprüche

1. Verfahren zur Herstellung von dünnwandigen Hohlkörpern aus konzentrischen, vorwiegend korrosionsbeständigen, hochwarmfesten und zunderbeständigen metallischen Schichten,
dadurch gekennzeichnet,
daß für die Innenschicht ein konventioneller dünnwandiger Hohlkörper als Werkstoffstütze verwendet wird, und die auf die Innenschicht folgenden weiteren äußeren Schichten durch Auftragschweißen mit einem oder mehreren Schweißköpfen in der Weise hergestellt werden, daß während des Auftragschweißens die dünnwandige Werkstoffstütze mit einem druckbeaufschlagten Kühlmedium gefüllt ist.

2. Verfahren nach Anspruch 1,
dadurch gekennzeichnet,
daß beim Auftragschweißen die gewünschte chemische Zusammensetzung der aufzutragenden Schichten unter Berücksichtigung des Aufmischungsverhältnisses zwischen aufgeschmolzenem und abgeschmolzenem Werkstoff eingestellt wird, wobei für hohe Aufmischungsverhältnisse das Auftragschweißen in waagerechter Position und für niedrige Aufmischungsverhältnisse das Auftragschweißen in senkrechter Position zur Anwendung kommt.

3. Verfahren nach den Ansprüchen 1 und 2,
dadurch gekennzeichnet,
daß bei der Auftragschweißung mittels eines oder mehrerer Schweißköpfe alle Schweißköpfe gleichzeitig, von der Relativbewegung des herzustellenden Hohlkörpers gesteuert, zu diesem radial und axial verstellt werden, so daß, unabhängig ob der Hohlkörper oder die Schweißköpfe die Rotationsbewegung durchführen, der Materialaufbau in radialer und axialer Richtung immer in vollautomatisierbarer Weise abläuft.

4. Vorrichtung zur Durchführung des Verfahrens nach den Ansprüchen 1 bis 3,
dadurch gekennzeichnet,
daß beim Auftragschweißen mit einem oder mehreren Schweißköpfen unter Verwendung eines fluiden Kühlmediums der als Werkstoffstütze dienende innere dünnwandige Hohlkörper (1) in Längsrichtung durch Trennwände (2, 3, 4) in einen oder mehrere Kühlabschnitte (5) unterteilt wird und mit abschnittsweise funktionierenden und der Anzahl der Schweißköpfe (6) bzw. Schweißbereiche (7) angepaßten Kühlkreisläufen (8, 9, 10) versehen ist.

5. Vorrichtung nach Anspruch 4,
dadurch gekennzeichnet,
daß die Kühlabschnitte (5) miteinander kommunizieren und mit gleichem Druck vom Kühlmedium beaufschlagt bzw. die Kühlkreisläufe (8, 9, 10) über gemeinsame Zufluß-und Abflußanschlüsse mit gleicher Menge Kühlmedium pro Zeiteinheit durchflossen werden.

6. Vorrichtung nach Anspruch 4,
dadurch gekennzeichnet,
daß die im Inneren des Hohlkörpers befindlichen Trennwände (2) so eingebaut sind, daß sie dichtend an der Innenfläche des Hohlkörpers (1) anliegen und die einzelnen Kühlkreisläufe (8, 9, 10) gegebenenfalls mit unterschiedlichen Drücken und Mengen Kühlmedium pro Zeiteinheit gespeist werden.

7. Vorrichtung zur Durchführung des Verfahrens nach den Ansprüchen 1 bis 3,
dadurch gekennzeichnet,
daß beim Auftragschweißen mit einem oder mehreren Schweißköpfen der als Werkstoffstütze dienende innere Hohlkörper auf einen als Kühlmedium dienenden, expandierbaren Metalldorn aufgespannt wird, der zur Ableitung der während des Auftragschweißens übernommenen Wärme mit einem oder mehreren, in Längsrichtung abschnittsweise funktionierenden Wasser-oder Luftkreisläufen versehen ist.

Fig. 1

0 271 696

Fig. 2